# EUROPÄISCHE PATENTSCHRIFT

(11) **EP 2 781 766 B1**
(45) Veröffentlichungstag und Bekanntmachung des Hinweises auf die Patenterteilung: **29.07.2015**
(21) Anmeldenummer: 13159823.7
(22) Anmeldetag: 18.03.2013
(51) Int. Cl.: F16B 12/12, A47F 5/08, A47B 57/48, A47B 96/06, F16B 9/02

(54) **Befestigungssystem**
Fastening system
Système de fixation

(43) Veröffentlichungstag der Anmeldung: 24.09.2014
(73) Patentinhaber: Trend-Store shop creation GmbH, 91171 Greding (DE)
(72) Erfinder: Hiemer, Johann, 92342 Freystadt-Burggriesbach (DE)
(74) Vertreter: Prüfer & Partner GbR European Patent Attorneys

(56) Entgegenhaltungen:
- WO-A1-2008/088793
- DE-U1-202009 004 336
- LU-A1- 41 369
- US-A- 3 833 090

## Beschreibung

Die vorliegende Erfindung bezieht sich auf ein Befestigungssystem mit einem ersten und einem zweiten Bauteil.

Bei bekannten Wandbefestigungssystemen für Regalböden werden die Regalböden durch eine Steckverbindung an einer Wand fixiert. Hierfür sind üblicherweise pro Regalboden mindestens zwei Muffen, die als Anschlag einen breiten Rand aufweisen und in der Wand eingelassen werden, und mindestens zwei Stifte, die zum Verbinden in die Muffen eingeführt werden, vorgesehen. Nachteilig ist bei diesen Systemen, dass der Montage- bzw. Demontageaufwand relativ hoch ist und sich der nach der Montage noch sichtbare Rand der Muffen negativ auf das optische Erscheinungsbild auswirkt. Darüber hinaus ist die Lagegenauigkeit dieser herkömmlichen Systeme gering.

Ein solches Befestigungssystem ist beispielsweise aus der DE 20 2009 004 336 bekannt. Allerdings ist hier nachteilig, dass nach wie vor, ein zu großes Spiel bei der Montage vorhanden ist und ein unerwünschtes Wackeln auftreten kann.

Die Aufgabe der vorliegenden Erfindung ist es, die oben genannten Nachteile zu beseitigen und ein spielfreies Einhängen des Befestigungssystems ohne Wackeln auf günstige Art und Weise zu ermöglichen.

Die Aufgabe wird gelöst durch ein Befestigungssystem gemäß Anspruch 1. Die Aufgabe wird außerdem gelöst durch ein Regalsystem gemäß Anspruch 13.

Weiterbildungen der Erfindung sind in den Unteransprüchen angegeben.

Durch die erfindungsgemäße Ausbildung der Seitenflächen ist es möglich, eine gänzlich spielfreie Verbindung zwischen dem ersten und dem zweiten Bauteil bereitzustellen. Dies wird ermöglicht durch Ausnutzen der Keilwirkung beim Einhängen des ersten Bauteils in das zweite Bauteil. Dadurch wird nicht nur die Verdrehfestigkeit des Befestigungssystems gewährleistet, sondern auch jegliches Wackeln der Bauteile beim Einhängen des ersten Bauteils in das zweite Bauteil sicher verhindert, da das erste Bauteil beim Einhängen in das zweite Bauteil durch das Eigengewicht am zweiten Ende nach unten gezogen wird, und die Seitenflächen am ersten Ende nach oben gegen die sich verjüngenden nach innen geneigten Seitenflächen des Durchbruchs gedrückt werden und dort verkeilen.

Beispielsweise können an den Befestigungselementen befestigte Regalböden auf diese Weise mit minimierter Lagetoleranz schnell und sicher montiert bzw. demontiert werden.

Die beiden Bauteile sind erfindungsgemäss im montierten Zustand durch das Zusammenwirken der beiden Vorsprünge gegen ein Lösen der Verbindung gesichert. Darüber hinaus wird durch die flächige Verbindung der Bauteile die Kraftübertragungsfläche maximiert. Die Spannungsverteilung innerhalb der Bauteile ist somit homogen, woraus eine hohe Belastbarkeit und eine hohe Lebensdauer resultieren. Durch die verdrehfeste Verbindung ist auch eine ungleiche Lastenverteilung auf den Regalböden problemlos möglich, die bei herkömmlichen Systemen zu einer Verkippung führt. Darüber hinaus wird durch die erfindungsgemäße Gestaltung ein optisch ansprechendes System geschaffen, da die Wand, an der das System angebracht wird, lediglich eine später durch das erste Bauteil verdeckte Bohrung pro Befestigungssystem aufweisen muss.

Ein weiterer Vorteil der Erfindung liegt darin, dass die Montage- bzw. Demontagezeit des erfindungsgemäßen Regalsystems im Vergleich zu herkömmlichen Systemen erheblich reduziert ist, da beim Montieren lediglich auf eine einzige Bauteilverbindung zu achten ist und das gleichzeitige Einhaken von zwei Trägern bei herkömmlichen Befestigungssystemen problematisch ist. Außerdem ist durch die erfindungsgemäße Gestaltung des Befestigungssystems eine werkzeuglose und schnellere Montage bzw. Demontage möglich, da der Anwender seine Aufmerksamkeit nur auf einen Montagepunkt lenken muss, während bei herkömmlichen Systemen die Aufmerksamkeit mindestens auf zwei Montagepunkte gleichzeitig gerichtet werden muss.

Vorzugsweise sind alle Seitenflächen als Spielpassungen ausgeführt. Die Montage des Bauteils wird hierdurch vereinfacht, da es zu keinem Verklemmen kommen kann.

Weiter vorzugsweise wird ein hochwertiger Stahl verwendet, so dass mit diesem System auch höhere Belastungen als bisher möglich sind.

Durch die im Wesentlichen zylindrische Form des ersten Bauteils werden Spannungsspitzen in diesem Bauteil vermieden.

Durch die Zweiteilung des zweiten Bauteils sinken die Herstellungskosten und der Montage- bzw. Demontageaufwand wird weiter reduziert.

Weitere Merkmale und Zweckmäßigkeiten der durch die Patentansprüche definierten Erfindung ergeben sich aus der Beschreibung von Ausführungsbeispielen anhand der beigefügten Zeichnungen. Von den Figuren zeigen:
- Fig. 1a: eine schematische Seitenansicht sowie eine Vorderansicht eines ersten Bauteils;
- Fig. 1b: eine schematische Draufsicht des ersten Bauteils;
- Fig. 1c: zwei schematische perspektivische Ansichten des ersten Bauteils;
- Fig. 2a: eine schematische perspektivische Ansicht einer Hülse,
- Fig. 2b: eine schematische Seitenansicht der Hülse,
- Fig. 3a: eine schematische Vorderansicht einer Platte,
- Fig. 3b: eine schematische Seitenansicht der Platte,
- Fig. 4a: eine schematische Vorderansicht eines zweiten Bauteils (Hülse und Platte),
- Fig. 4b: eine schematische Seitenansicht des demontierten ersten und zweiten Bauteils,
- Fig. 4c: eine schematische Schnittansicht des montierten ersten und zweiten Bauteils,

Im Folgenden wird eine erste Ausführungsform der vorliegenden Erfindung beschrieben.

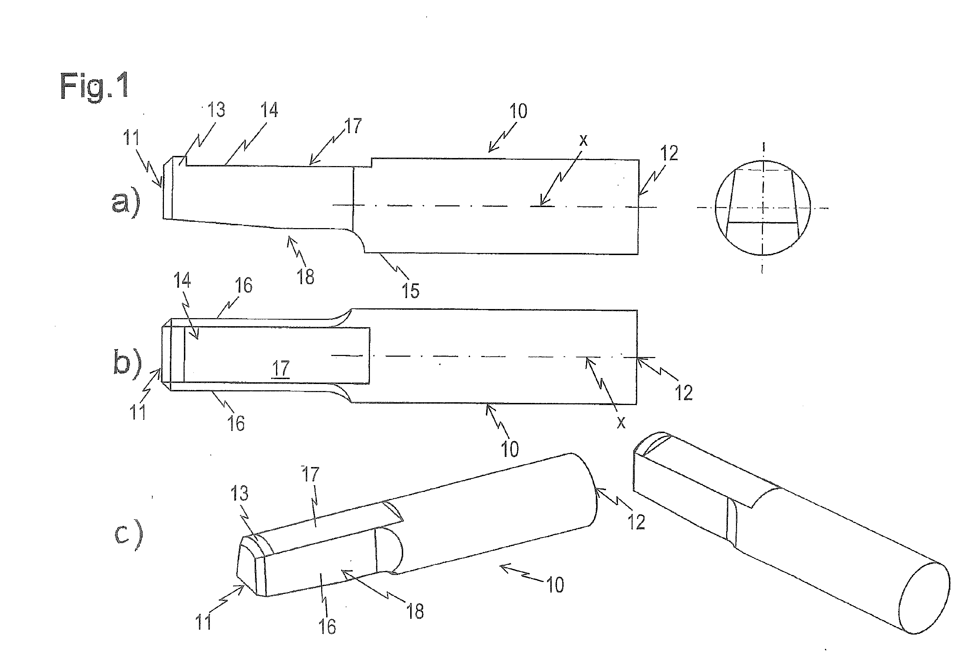

Fig. 1a zeigt ein erstes Bauteil 10 bzw. einen Adapter 10 mit einem ersten Ende 11, einem zweiten Ende 12 und einer Längsachse X. Das erste Bauteil 10 ist im Wesentlichen zylinderförmig ausgebildet und ist zum ersten Ende 11 hin verjüngt. Hierfür ist im oberen Bereich der Fig. 1a eine erste Ausnehmung 17 vorgesehen, von der ein Teil eine erste Auflagefläche 14 bildet. Durch das Vorsehen der ersten Ausnehmung 17 entsteht am ersten Ende 11 des ersten Bauteils 10 ein erster Vorsprung 13, der sich von der Längsachse X aus gesehen radial nach außen bzw. vertikal nach oben erstreckt. Im unteren Bereich von Fig. 1a, zum ersten Ende 11 hin, ist die Verjüngung des ersten Bauteils 10 zum ersten Ende 11 hin durch eine zweite Ausnehmung 18 realisiert.

Fig. 1b zeigt das erste Bauteil 10 in einer Draufsicht. Am ersten Ende 11 des ersten Bauteils 10 sind zwei erste Seitenflächen 16 vorgesehen. Die erste Ausnehmung 17 erstreckt sich von dem ersten Ende 11 aus bis ca. zur Mitte des ersten Bauteils 10 hin. Der Abstand der beiden Seitenflächen 16 bzw. deren Formtoleranz ist mit ±0,05 mm sehr genau gewählt.

Fig. 1c zeigt das erste Bauteil 10 zum Einen in einer ersten schematischen perspektivischen Ansicht von schräg vorne und zum Anderen in einer zweiten schematischen perspektivischen Ansicht von schräg hinten.

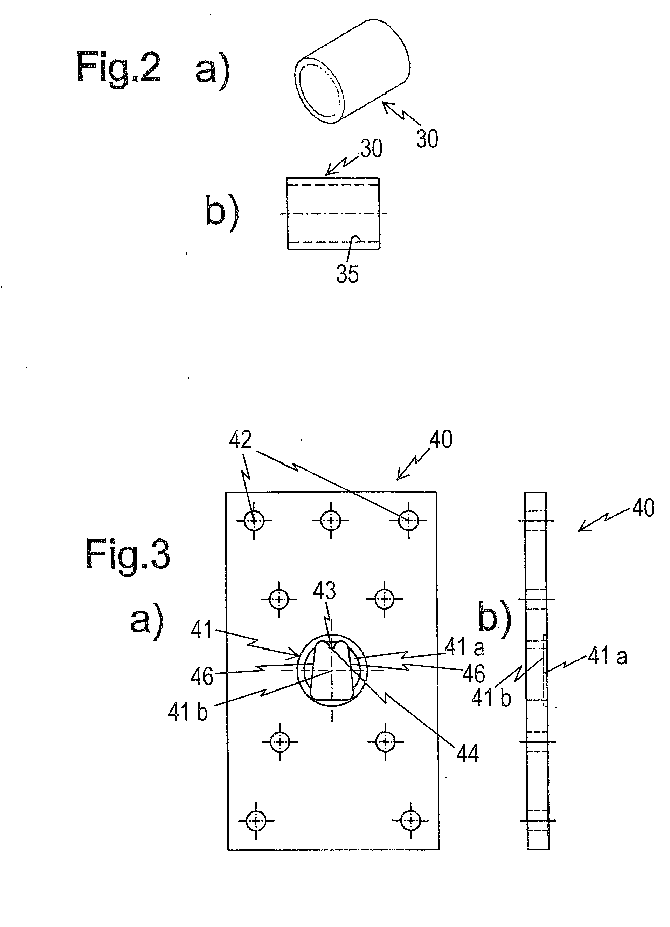

Fig. 2a zeigt ein erstes Teil 30 bzw. eine Hülse 30 oder Muffe 30 in einer schematischen perspektivischen Ansicht.

Fig. 2b zeigt die Hülse 30 in einer schematischen Seitenansicht, wobei die Innenseite der Hülse 30 eine vierte Auflagefläche 35 aufweist.

Fig. 3a zeigt ein zweites Teil 40 bzw. eine Platte 40. Die Platte 40 ist rechteckförmig ausgebildet und weist eine Vielzahl an Bohrungen 42 zum Befestigen der Platte 40 auf. In der Mitte der Platte 40 ist ein Durchbruch 41 vorgesehen. Der Durchbruch 41 setzt sich aus einem kreisförmigen Durchbruch 41a, der sich ca. bis zur Mitte der Platte 40 in die Zeichenebene hinein erstreckt und einem im Querschnitt im Wesentlichen M-förmigen Durchbruch 41b, der sich in Richtung der Zeichenebene an den kreisförmigen Durchbruch 41a anschließt und durch die Platte 40 hindurchreicht. Dabei sind die beiden vertikalen Schenkel des "M" nicht wirklich vertikal, sondern vielmehr nach oben innen geneigt, wie später noch detaillierter erläutert werden wird. Die Schenkel bilden zwei gegenüberliegende Seiten des Durchbruchs 41b und dienen als zwei zweite Seitenflächen 46. Die in der Darstellung Fig. 3a oben gezeigte Seite des Durchbruchs 41b weist einen Vorsprung 43 auf. Dieser wird auf sehr einfache Art und Weise gefertigt, indem ein Fingerfräser, der den Durchbruch 41 ausfräst, so dimensioniert gewählt wird, dass er beim Ausfräsen der Umrisse den Vorsprung 43 einfach stehen lässt.

Fig. 3b zeigt die Platte 40 in einer schematischen Seitenansicht.

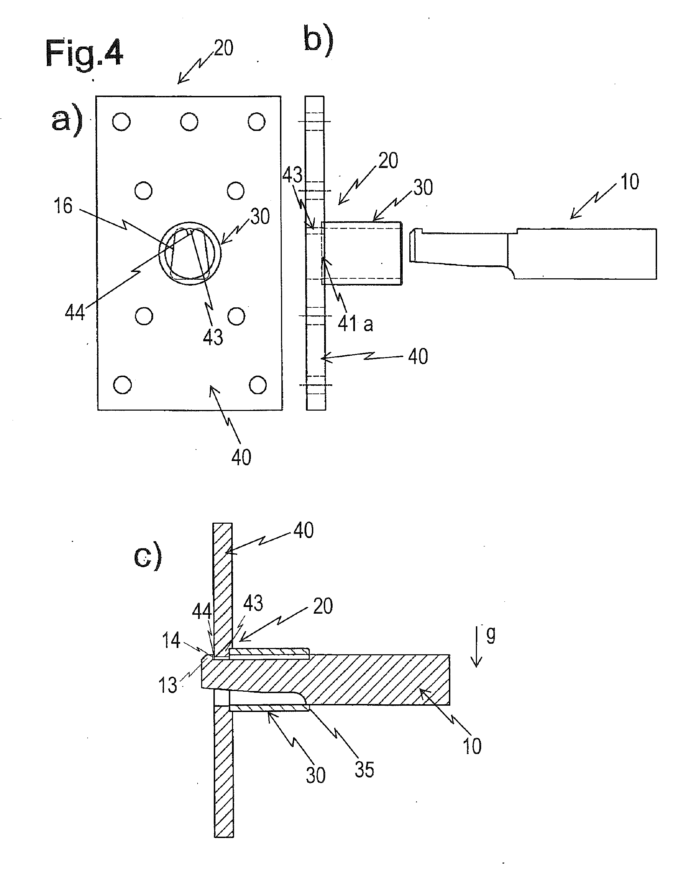

Fig. 4a zeigt ein zweites Bauteil 20, das aus der Hülse 30 und der Platte 40 zusammensetzbar ist.

Fig. 4b zeigt das zweite Bauteil 20 in einer Seitenansicht. Die Hülse 30 ist derart dimensioniert, dass sie in den kreisförmigen Durchbruch 41a gesteckt werden kann. Vorzugsweise ist diese Bauteilverbindung zwischen der Hülse 30 und der Platte 40 als leichte Übermaßpassung ausgeführt, um den festen, aber verklemmungsfreien Sitz der Hülse 30 in der Platte 40 zu gewährleisten. Die Hülse 30 kann mit der Platte 40 verschweißt sein. Im rechten Teil von Fig. 4b ist das erste Bauteil 10 gezeigt, das in das zweite Bauteil 20 einführbar ist.

Fig. 4c zeigt das erste Bauteil 10 und das zweite Bauteil 20 in einer schematischen Schnittansicht im montierten Zustand. Das erste Bauteil 10 wird hierfür zunächst entgegen dem Uhrzeigersinn leicht nach unten gekippt und dann durch den Durchbruch 41 in das zweite Bauteil 20 eingeführt. Sobald der erste Vorsprung 13 den zweiten Vorsprung 43 passiert hat, wird das erste Bauteil 10 in der Zeichenebene im Uhrzeigersinn zurück gekippt, bis die horizontale Ausgangslage wieder erreicht ist.

Die erste Auflagefläche 14 des ersten Bauteils 10 steht im montierten Zustand mit der dritten Auflagefläche 44 der Platte 40 in Kontakt. Weiterhin steht die erste Auflagefläche 14 des ersten Bauteils 10 mit der vierten Auflagefläche 35 der Hülse 30 in Kontakt. Nimmt man das zweite Bauteil 20 als ortsfest an, ist das erste Bauteil 10 durch die beiden Flächenkontakte in Richtung der Erdanziehungskraft stabil; in die entgegengesetzte Richtung ist es kippbar. Um die verdrehfeste Verbindung der beiden Bauteile 10, 20 zu gewährleisten, stehen im montierten Zustand die ersten Seitenflächen 16 (siehe Fig. 1b) mit den zweiten Seitenflächen 46 (siehe Fig. 3a) in Kontakt. Die Formtoleranz dieser Passung ist sehr genau gewählt, um eine optimale Bauteilverbindung zu erreichen (mindestens ±0,05 mm Toleranz). Das erste Bauteil 10 ragt im montierten Zustand über den Durchbruch 41 des zweiten Bauteils 20 hinaus. Durch das Zusammenwirken des ersten Vorsprungs 13 mit dem zweiten Vorsprung 43 ist das erste Bauteil 10 gegen Herausziehen aus dem zweiten Bauteil 20 gesichert.

Um zu verhindern, dass das erste Bauteil 10 weiter in das zweite Bauteil 20 rutscht, also dass sich das erste Bauteil 10 in Fig. 4c von rechts nach links bewegt, wird das erste Bauteil 10 im montierten Zustand mit dem zweiten Bauteil 20 fest, aber lösbar verbunden. Dies kann beispielsweise über einen Begrenzungsstift, angeschweißte Begrenzungsabschnitte oder andere konstruktive Maßnahmen realisiert werden.

Unter Verweis auf die Vorderansicht in Fig. 1a) oder die perspektivische Ansicht von schräg vorne in Fig. 1c) ist deutlich zu erkennen, dass die Seitenflächen 16 des ersten Bauteils 10 von unten nach oben keilförmig nach innen geneigt ausgebildet sind.

Ebenso sind die Seitenflächen 46 des Durchbruchs 41 des zweiten Bauteils 20 im Wesentlichen komplementär ausgebildet.

Wird nun das erste Bauteil 10 in das zweite Bauteil 20 eingeführt, und berücksichtigt man die Gewichtsverteilung des ersten Bauteils 10 (da der Teil rechts vom Durchbruch überstehende Teil des ersten Bauteils 10 wesentlich länger ist als der Teil links vom Durchbruch 41), so wird klar, dass das zweite Ende 12 bereits durch das Eigengewicht nach unten gezogen wird, während das erste Ende 11 umgekehrt nach oben gedrückt wird. Wenn das erste Bauteil in seiner Funktion als Aufhänger oder Lagerbauteil für einen Regalboden, etc., mit zusätzlichem Gewicht belastet wird, verstärkt sich dieser Effekt noch deutlich.

Dadurch rutschen die keilförmig geneigten Seitenflächen 16 des ersten Bauteils an den keilförmig geneigten Seitenflächen 46 des zweiten Bauteils entlang nach oben und werden durch die Keilform festgeklemmt. Insofern werden bei der Montage eventuelle Toleranzfehler oder Spiel beseitigt und ein Wackeln der Bauteile wird sicher verhindert. Ein Demontieren geht ebenso einfach, indem man das erste Bauteil mit dem zweiten Ende nach oben drückt, so dass das erste Ende 11 aus der Verkeilung nach unten bewegt wird und die Seitenflächen 16 und 46 voneinander gelöst werden können.

Durch diese Ausbildung und durch die Verwendung eines hochwertigen Stahls, aus dem die beiden Bauteile gefertigt werden, können wesentlich höhere Lasten getragen werden. Dementsprechend ist auch das zweite Bauteil mit einer größeren Fläche ausgestattet, damit die Montage verbessert werden kann, einerseits durch eine höhere Anzahl an Befestigungsschrauben, andererseits durch eine größere Anlagefläche, die die Zug- und Druckkräfte besser verteilen kann.

Die Verwendung eines hochwertigen Stahls hat zudem den Vorteil, dass auch bei mehrfachem Montieren/Demontieren der beiden Bauteile kein merklicher Verschleiß eintritt, der ansonsten dazu führen könnte, dass der längere Teil des Bauteils 10 leicht nach unten hängen würde und das Erscheinungsbild trüben könnte.

Das durch die Patentansprüche definierte Regalsystem ist nicht auf die beschriebenen Ausführungsformen beschränkt. Mit Hilfe des erfindungsgemäßen Befestigungssystems können eine Vielzahl von Regalsystemen befestigt werden.

## Patentansprüche

1. Befestigungssystem mit einem ersten Bauteil (10) und einem zweiten Bauteil (20), wobei
das erste Bauteil (10) eine längliche Form mit einer Längsachse (X) aufweist, mit einem ersten axialen Ende (11) und einem zweiten axialen Ende (12), mit Seitenflächen (16) links und rechts und einem ersten Vorsprung (13) am ersten Ende (11), der sich von der Längsachse (X) aus gesehen im Wesentlichen vertikal nach außen erstreckt, wobei
das zweite Bauteil (20) im Wesentlichen flächig geformt ist und einen Durchbruch (41) aufweist, der dazu angepasst ist, das erste Ende (11) des ersten Bauteils (10) aufzunehmen, wobei
der Durchbruch (41) Seitenflächen (46) links und rechts aufweist, die dazu angepasst sind, die ersten Seitenflächen (16) des ersten Bauteils (10) derart aufzunehmen, dass das erste Bauteil (10) verdrehfest mit dem zweiten Bauteil (20) lösbar verbunden ist, wenn das erste Bauteil (10) vom zweiten Bauteil (20) aufgenommen ist, wobei
der Durchbruch (41) des zweiten Bauteils (20) einen Vorsprung (43) aufweist, der vertikal nach unten ausgebildet ist und derart mit dem Vorsprung (13) des ersten Bauteils (10) zusammenwirkt, dass das erste Bauteil (10) gegen Herausziehen entlang der Längsachse (X) aus dem zweiten Bauteil (20) gesichert ist, wenn das erste Bauteil (10) vom zweiten Bauteil (20) aufgenommen ist, **dadurch gekennzeichnet, dass** die Seitenflächen (16) des ersten Bauteils (10) in Vertikalrichtung nach oben zueinander geneigt ausgebildet sind, und die Seitenflächen (46) des zweiten Bauteils (20) in Vertikalrichtung nach oben zueinander geneigt ausgebildet sind.

2. Befestigungssystem gemäß Anspruch 1, **dadurch gekennzeichnet, dass** das erste Bauteil (10) eine erste Auflagefläche (14) und eine zweite Auflagefläche (15) und das zweite Bauteil (20) eine dritte Auflagefläche (44) und eine vierte Auflagefläche (35) aufweist, wobei die erste Auflagefläche (14) mit der dritten Auflagefläche (44) und/oder die zweite Auflagefläche (15) mit der vierten Auflagefläche (35) in Kontakt steht, wenn das erste Bauteil (10) vom zweiten Bauteil (20) aufgenommen ist.

3. Befestigungssystem gemäß Anspruch 1 oder 2, **dadurch gekennzeichnet, dass** das erste Bauteil (10) über den Durchbruch (41) des zweiten Bauteils (20) hinausragt, wenn das erste Bauteil (10) vom zweiten Bauteil (20) aufgenommen ist.

4. Befestigungssystem gemäß einem der Ansprüche 1 bis 3, **dadurch gekennzeichnet, dass** das erste Bauteil (10) nur durch Verkippen in das zweite Bauteil einführbar ist und aus diesem entfernbar ist.

5. Befestigungssystem gemäß einem der Ansprüche 1 bis 4, **dadurch gekennzeichnet, dass** das erste Bauteil (10) in Richtung des ersten Endes (11) verjüngt ausgebildet ist.

6. Befestigungssystem gemäß einem der Ansprüche 1 bis 5, **dadurch gekennzeichnet, dass** die Formtoleranz der Seitenflächen +/- 0,05 mm beträgt.

7. Befestigungssystem gemäß einem der Ansprüche 1 bis 6, **dadurch gekennzeichnet, dass** das erste Bauteil (10) im Wesentlichen zylinderförmig ausgebildet ist.

8. Befestigungssystem gemäß einem der Ansprüche 1 bis 7, **dadurch gekennzeichnet, dass** das erste Bauteil (10) zumindest teilweise flächig von dem zweiten Bauteil (20) aufnehmbar ist.

9. Befestigungssystem gemäß einem der Ansprüche 1 bis 8, **dadurch gekennzeichnet, dass** das zweite Bauteil (20) ein erstes Teil (30) und ein zweites Teil (40) aufweist.

10. Befestigungssystem gemäß Anspruch 9, **dadurch gekennzeichnet, dass** das erste Teil (30) als Hülse ausgebildet ist.

11. Befestigungssystem gemäß Anspruch 9 oder 10, **dadurch gekennzeichnet, dass** das zweite Teil (40) im Wesentlichen als Platte ausgebildet ist.

12. Befestigungssystem gemäß einem der Ansprüche 1 bis 11, **dadurch gekennzeichnet, dass** alle Seitenflächen als Spielpassungen ausgeführt sind.

13. Regalsystem, das ein Befestigungssystem gemäß einem der Ansprüche 1 bis 12 aufweist.

14. Regalsystem gemäß Anspruch 13, **dadurch gekennzeichnet, dass** mindestens ein Regalboden (50) vorgesehen ist.

## Claims

1. Fastening system comprising a first component (10) and a second component (20), wherein
the first component (10) has an elongate shape with a longitudinal axis (X), with a first axial end (11) and a second axial end (12), with lateral faces (16) on the left and right and with a first projection (13) at the first end (11), which projection, as viewed from the longitudinal axis (X), extends substantially vertically outward, wherein
the second component (20) is formed to be substantially flat and has a through-passage (41) which is adapted to receive the first end (11) of the first component (10), wherein
the through-passage (41) has lateral faces (46) on the left and right which are adapted to receive the first lateral faces (16) of the first component (10) in such a way that the first component (10) is releasably connected to the second component (20) in a rotationally fixed manner when the first component (10) is received by the second component (20), wherein
the through-passage (41) of the second component (20) has a projection (43) which is designed to be vertically downward and interacts with the projection (13) of the first component (10) in such a way that the first component (10) is secured against being pulled out of the second component (20) along the longitudinal axis (X) when the first component (10) is received by the second component (20), **characterized in that** the lateral faces (16) of the first component (10) are designed to be upwardly inclined with respect to one another in the vertical direction, and the lateral faces (46) of the second component (20) are designed to be upwardly inclined with respect to one another in the vertical direction.

2. Fastening system according to Claim 1, **characterized in that** the first component (10) has a first bearing surface (14) and a second bearing surface (15) and the second component (20) has a third bearing surface (44) and a fourth bearing surface (35), wherein the first bearing surface (14) is in contact with the third bearing surface (44) and/or the second bearing surface (15) is in contact with the fourth bearing surface (35) when the first component (10) is received by the second component (20).

3. Fastening system according to Claim 1 or 2, **characterized in that** the first component (10) projects beyond the through-passage (41) in the second component (20), when the first component (10) is received by the second component (20).

4. Fastening system according to one of Claims 1 to 3, **characterized in that** the first component (10) can be introduced into and removed from the second component only by tilting.

5. Fastening system according to one of Claims 1 to 4, **characterized in that** the first component (10) is designed to be tapered in the direction of the first end (11).

6. Fastening system according to one of Claims 1 to 5, **characterized in that** the shape tolerance of the lateral faces is +/- 0.05 mm.

7. Fastening system according to one of Claims 1 to 6, **characterized in that** the first component (10) is designed to be substantially cylindrical.

8. Fastening system according to one of Claims 1 to 7, **characterized in that** the first component (10) can be received at least partially flat by the second component (20).

9. Fastening system according to one of Claims 1 to 8, **characterized in that** the second component (20) has a first part (30) and a second part (40).

10. Fastening system according to Claim 9, **characterized in that** the first part (30) takes the form of a sleeve.

11. Fastening system according to Claim 9 or 10, **characterized in that** the second part (40) substantially takes the form of a plate.

12. Fastening system according to one of Claims 1 to 11, **characterized in that** all the lateral faces are designed as clearance fits.

13. Shelf system which has a fastening system according to one of Claims 1 to 12.

14. Shelf system according to Claim 13, **characterized in that** at least one shelf (50) is provided.

## Revendications

1. Système de fixation à un premier composant (10) et à un deuxième composant (20) ;
le premier composant (10) présentant une forme allongée avec un axe longitudinal (X), avec une première extrémité axiale (11) et une deuxième extrémité axiale (12), avec des surfaces latérales (16) à gauche et à droite et une première saillie (13) prévue au niveau de la première extrémité (11) et s'étendant depuis l'axe longitudinal (X) pour l'essentiel verticalement vers l'extérieur ;
le deuxième composant (20) prenant pour l'essentiel une forme plane et comportant un passage traversant (41) adapté pour recevoir la première extrémité (11) du premier composant (10) ;
le passage traversant (41) comportant des surfaces latérales (46) à gauche et à droite adaptées pour recevoir de telle sorte les premières surfaces latérales (16) du premier composant (10) que le premier composant (10) est relié fixement sans torsion de façon amovible au deuxième composant (20) lorsque le premier composant (10) est reçu par le deuxième composant (20) ;
le passage traversant (41) du deuxième composant (20) comportant une saillie (43) réalisée verticalement vers le bas et interagissant de telle sorte avec la saillie (13) du premier composant (10) que le premier composant (10) est sécurisé contre tout retrait, le long de l'axe longitudinal (X), hors du deuxième composant (20) lorsque le premier composant (10) est reçu par le deuxième composant (20) ;
**caractérisé en ce que** les surfaces latérales (16) du premier composant (10) sont réalisées de façon inclinée les unes par rapport aux autres vers le haut dans la direction verticale et que les surfaces latérales (46) du deuxième composant (20) sont réalisées de façon inclinée les unes par rapport aux autres vers le haut dans la direction verticale.

2. Système de fixation selon la revendication 1, **caractérisé en ce que** le premier composant (10) comporte une première surface portante (14) et une deuxième surface portante (15) et que le deuxième composant (20) comporte une troisième surface portante (44) et une quatrième surface portante (35), la première surface portante (14) étant en contact avec la troisième surface portante (44) et/ou la deuxième surface portante (15) étant en contact avec la quatrième surface portante (35) lorsque le premier composant (10) est reçu par le deuxième composant (20).

3. Système de fixation selon la revendication 1 ou 2, **caractérisé en ce que** le premier composant (10) ressort au-delà du passage traversant (41) du deuxième composant (20) lorsque le premier composant (10) est reçu par le deuxième composant (20).

4. Système de fixation selon l'une quelconque des revendications 1 à 3, **caractérisé en ce que** le premier composant (10) ne peut être introduit et retiré que par bascule dans le deuxième composant.

5. Système de fixation selon l'une quelconque des revendications 1 à 4, **caractérisé en ce que** le premier composant (10) est réalisé de façon à se rétrécir en direction de la première extrémité (11).

6. Système de fixation selon l'une quelconque des revendications 1 à 5, **caractérisé en ce que** la tolérance de forme des surfaces latérales est de +/-0,05 mm.

7. Système de fixation selon l'une quelconque des revendications 1 à 6, **caractérisé en ce que** le premier composant (10) est réalisé pour l'essentiel en forme de cylindre.

8. Système de fixation selon l'une quelconque des revendications 1 à 7, **caractérisé en ce que** le premier composant (10) peut être reçu au moins en partie à plat par le deuxième composant (20).

9. Système de fixation selon l'une quelconque des revendications 1 à 8, **caractérisé en ce que** le deuxième composant (20) comporte une première partie (30) et une deuxième partie (40).

10. Système de fixation selon la revendication 9, **caractérisé en ce que** la première partie (30) prend la forme d'une douille.

11. Système de fixation selon la revendication 9 ou 10, **caractérisé en ce que** la deuxième partie (40) prend pour l'essentiel la forme d'une plaque.

12. Système de fixation selon l'une quelconque des revendications 1 à 11, **caractérisé en ce que** toutes les surfaces latérales prennent la forme d'éléments d'ajustement du jeu.

13. Système d'étagères comportant un système de fixation selon l'une quelconque des revendications 1 à 12.

14. Système d'étagères selon la revendication 13, **caractérisé en ce qu'**au moins un plancher d'étagères (50) est prévu.
